(19) Europäisches Patentamt / European Patent Office / Office européen des brevets

(11) **EP 1 999 016 B1**

(12) **EUROPEAN PATENT SPECIFICATION**

(45) Date of publication and mention of the grant of the patent:
**27.01.2010 Bulletin 2010/04**

(21) Application number: **07735256.5**

(22) Date of filing: **26.03.2007**

(51) Int Cl.:
**B64C 29/00** *(2006.01)*   **B64C 39/04** *(2006.01)*

(86) International application number:
**PCT/IB2007/051049**

(87) International publication number:
**WO 2007/110833 (04.10.2007 Gazette 2007/40)**

(54) **CONVERTIBLE AIRCRAFT**

KONVERTIERBARES FLUGZEUG

AERONEF CONVERTIBLE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.03.2006 IT BR20060004**

(43) Date of publication of application:
**10.12.2008 Bulletin 2008/50**

(73) Proprietor: **International Aviation Supply I.A.S. S.R.L.**
**72100 Brindisi (IT)**

(72) Inventor: **MIODUCHEVSKI, Pavel**
**I-72100 Brindisi (IT)**

(74) Representative: **Papa, Elisabetta et al**
**Società Italiana Brevetti S.p.A**
**Piazza di Pietra, 39**
**00186 Roma (IT)**

(56) References cited:
**DE-A1- 1 947 944   US-A- 2 876 965**
**US-A- 3 049 320   US-A- 4 613 097**
**US-B1- 6 343 768**

**EP 1 999 016 B1**

## Description

The present invention relates to the field of general aviation and may be applied indiscriminately both to conventional aircrafts with onboard pilot and to highly automated aircrafts with no onboard pilot (unmanned) (UAV,UCAV, UAS)

In the aviation field it is known the convertible aircraft V22 Osprey, developed by Bell Helicopter Textron and Boeing aeronautic industries ( Aviation Week & Space Technology, January 2, 2006, page 56)
Moreover, Bell Helicopter -Textron have also developed an unmanned aircraft, UAS TR918 Eagle Eye, which has an aeromechanical scheme similar to the V22 Osprey (Aviation Week & Space Technology, February 6, 2006, page 36).

The drawbacks of a V22 Osprey-type convertible aircraft are the following:

a) The two heavy engines are installed each at the wing ends, the span is equal to the distance between axes and engines; this fact requires great rigidity of the wing structure, considerably increasing the weight of the structure.

b) V22 Osprey engines and TR918 Eagle Eye rotors must be synchronized through a mechanical transmission placed in the wing structure, increasing the weight of the entire structure.

c) Engines and rotors are placed at the end of each wing. Engines, rotors and transmission are sources of powerful vibrations and noise..

d) The Osprey-type system does not ensure flight stability and safety in case of a rotor (engine)malfunctioning and/or breaking.

e) The span in this Osprey-type aeromechanical system must necessarily be not extended above a certain limit. If the span exceeds this limit the problem of aeroelastic vibrations becomes unsolvable.

f) The Osprey-type system is not capable of flying or landing at a relatively low speed, as a normal-scheme aircraft can do.

Each of US-A-4613097, US-A-3049320, DE 1947944A1 and US-B1-6343768 discloses an aircraft having one (lateral) axis of thrust vector rotation that permits thrust vector control only in a longitudinal vertical plane.
Aircraft described in US-A-2876965 has two axes of thrust vector rotation but the axes positions on the aircraft do not permit full thrust vector control because the first axis is fixed on the aircraft in a longitudinal direction, providing roll rotation of the external ring of thrust device and the second axis is fixed on the external ring in the perpendicular direction to the first axis. Limitation of this arrangement becomes clear in a horizontal flight position: the movement around the first (longitudinal) axis does not provide any change in thrust vector orientation.

Object of the present invention is to solve the technical problems of the convertible aircraft and provide an aeromechanical scheme of the convertiplane as free from the abovementioned drawbacks.

Such a problem is mainly solved by an apparatus according to claim 1. The present invention provides several relevant advantages. One of the main advantages is that the invention increases the efficiency and the safety of the convertible aircraft. The present invention provides for the center of gravity of the engine with coaxial rotors to coincide with the center of gravity of the convertible aircraft. Span and wing surface of the convertiplane may be designed and built at the desired features: speed, distance and altitude of flight, of takeoff and of landing

Other advantages, features and the operation modes of the present invention will be made apparent from the following detailed description of some embodiments thereof, given by way of example and not for limitative purposes.

Reference will be made to the figures of the annexed drawings, wherein:

Fig. 1 shows a plan view of a triangular-wing convertible aircraft;

Fig. 2 shows a plan view and a cross-sectional view of the propulsion apparatus of the convertible aircraft;

Figs. 3 and 4 show respectively a front view and a side view of the convertible aircraft of Fig. 1;

Fig. 5 shows a plan view of another triangular-wing convertible aircraft;

Figs. 6 and 7 show respectively a front view and a side view of the convertible aircraft of Fig. 5;

Figs. 8 and 9 show respectively a front view and a plan view of a further convertible aircraft;

Fig. 10 shows a plan view and a cross-sectional view of the propulsion apparatus of the convertible aircraft with a turbo-propeller engine;

Fig. 10a shows a view along direction A of the propulsion apparatus of Fig. 10;

Fig. 11 shows a schematic plan view of the power units, and of the operation devices of the propulsion apparatus of the convertible aircraft;

Fig. 12 shows a side view of the convertible aircraft with the schematics of the aerodynamic forces;

Figs. 13 and 14 show respectively: a plan view and a side view of an embodiment of the convertible aircraft according to the present invention with three fuselages.

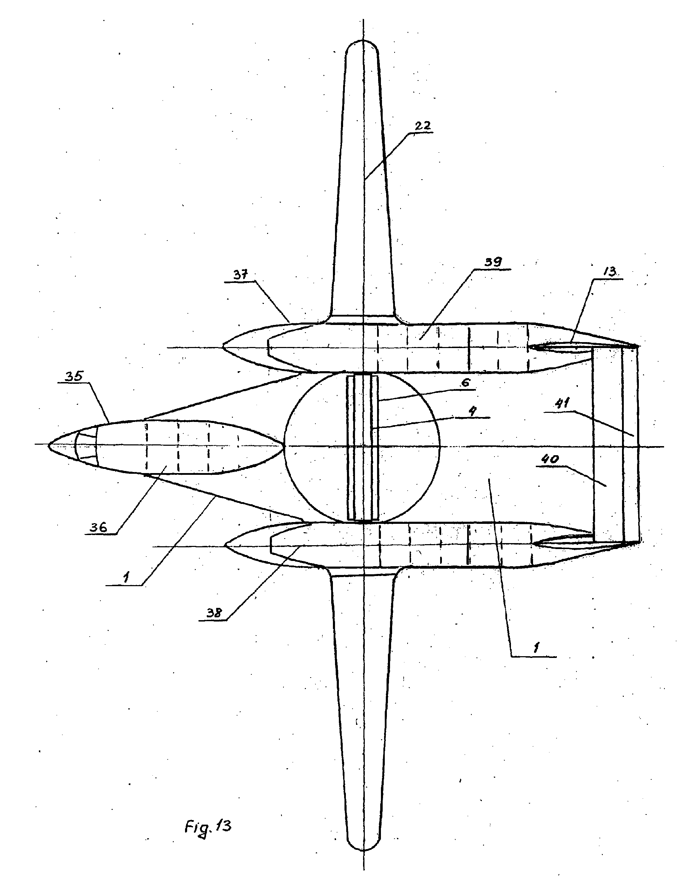

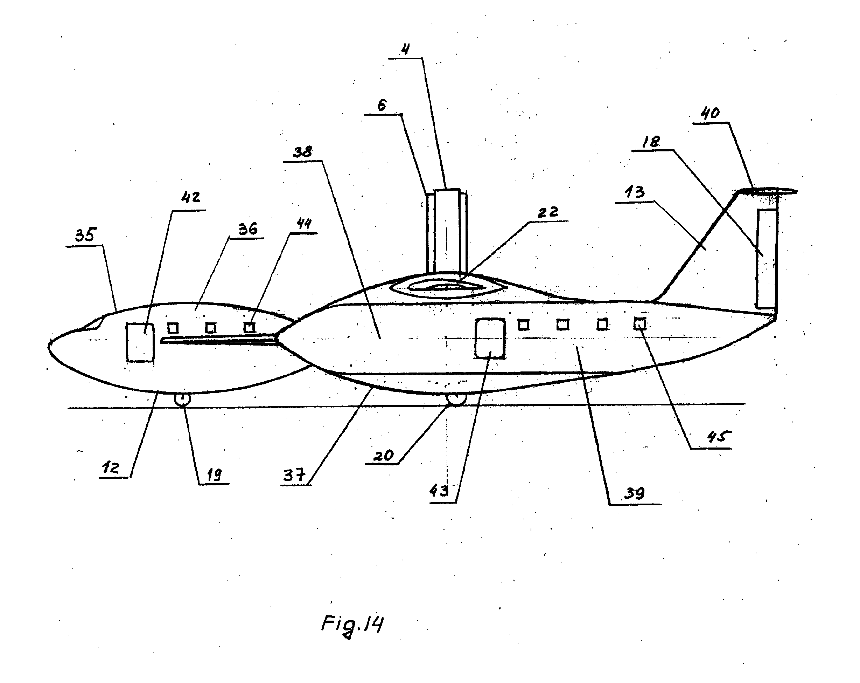

Only Figures 13 and 14 show an embodiment of the claimed invention.

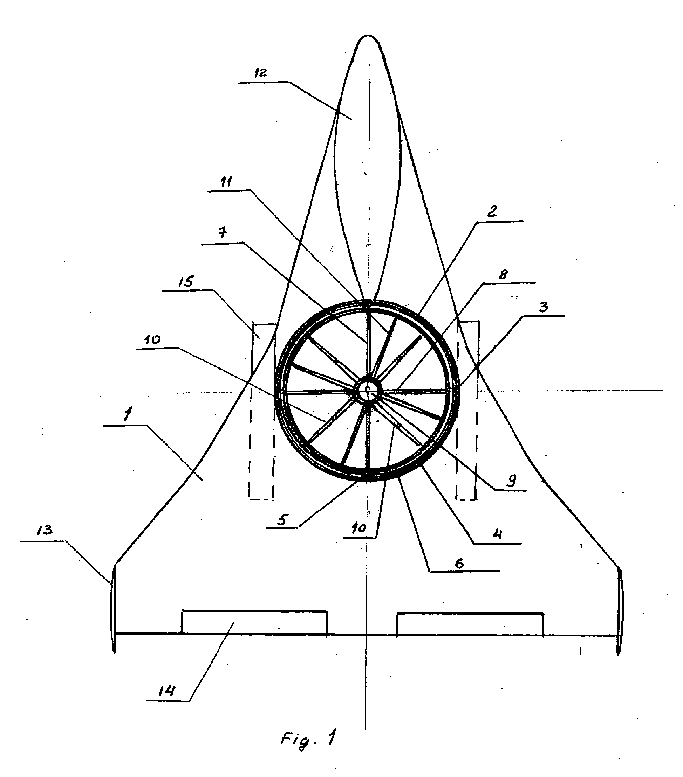

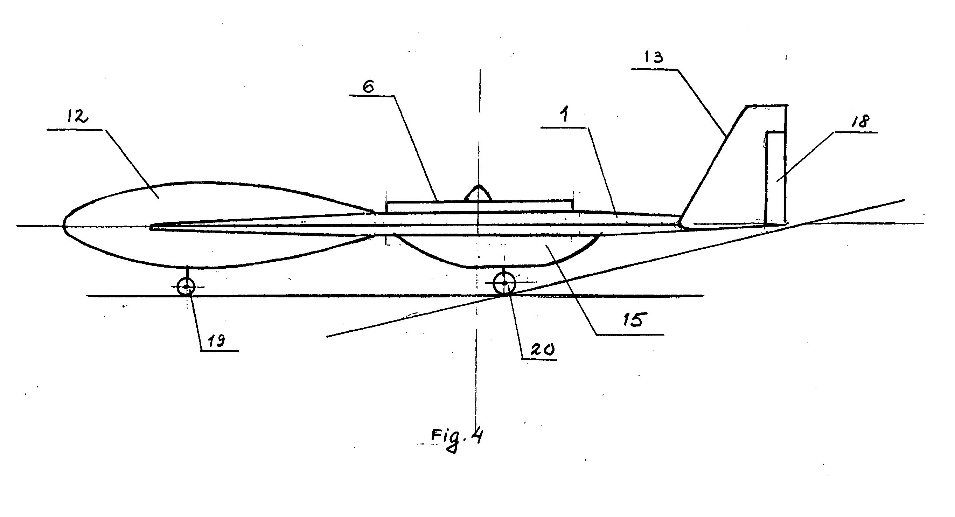

Referring to Figs. 1 to 4, there may be seen a triangular-wing convertible aircraft, mainly comprising:

a triangular wing 1, a front fuselage 12, two fins 13, each with rudder 18, elevator 14 manufactured in two sections, which may also serve as ailerons, two nacelles 15 comprising the main landing gears 20 and electromechanic control devices. The wing 1 has a circular hole 2 with the center corresponding with the center of gravity of the aircraft. Inside the hole 2 an external ring 4 is hung to the horizontal and transversal hinges 3. Inside the external ring 4 the air sucking ring 6 is hung to the longitudinal hinges 5.

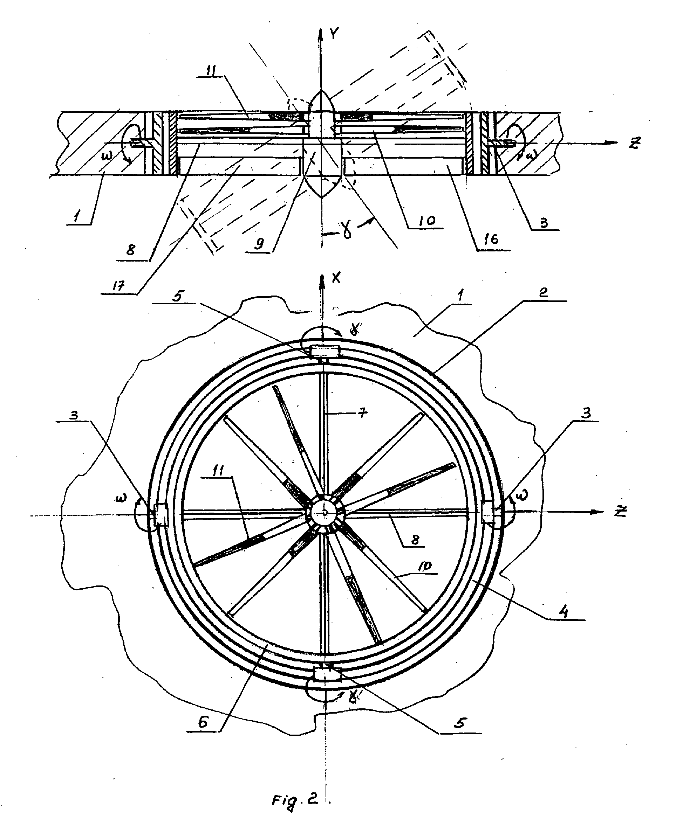

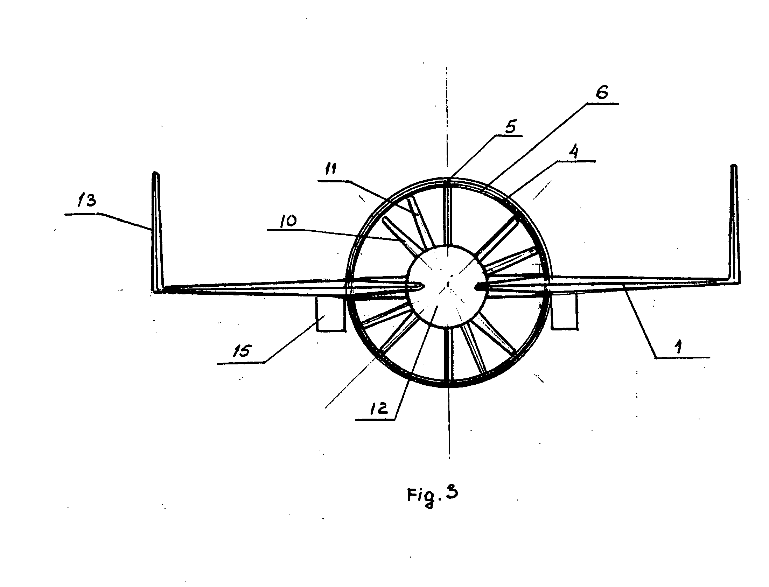

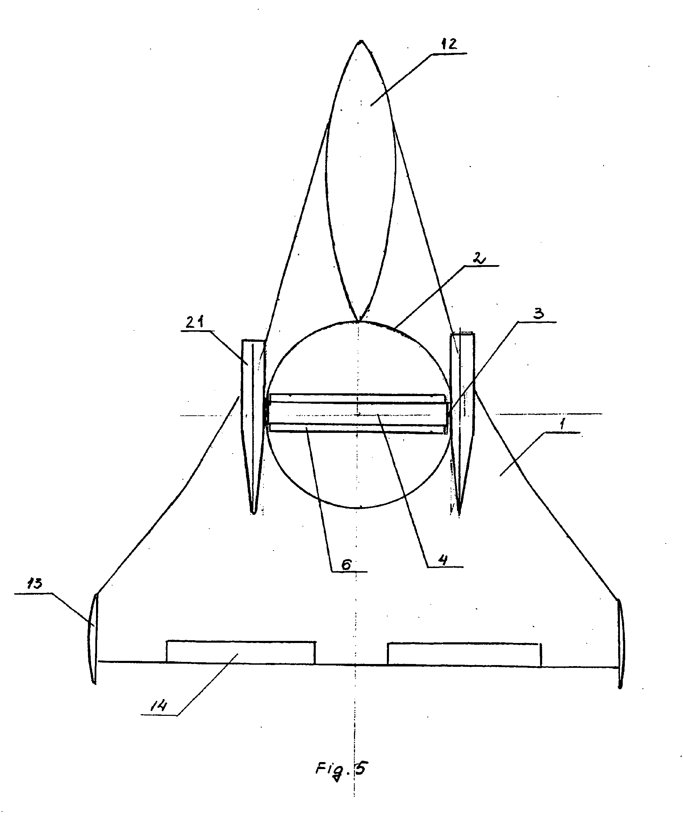

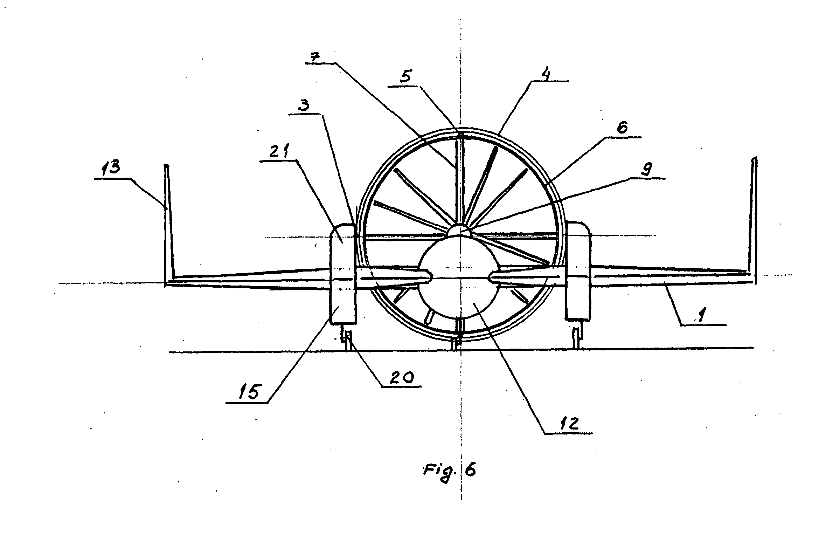

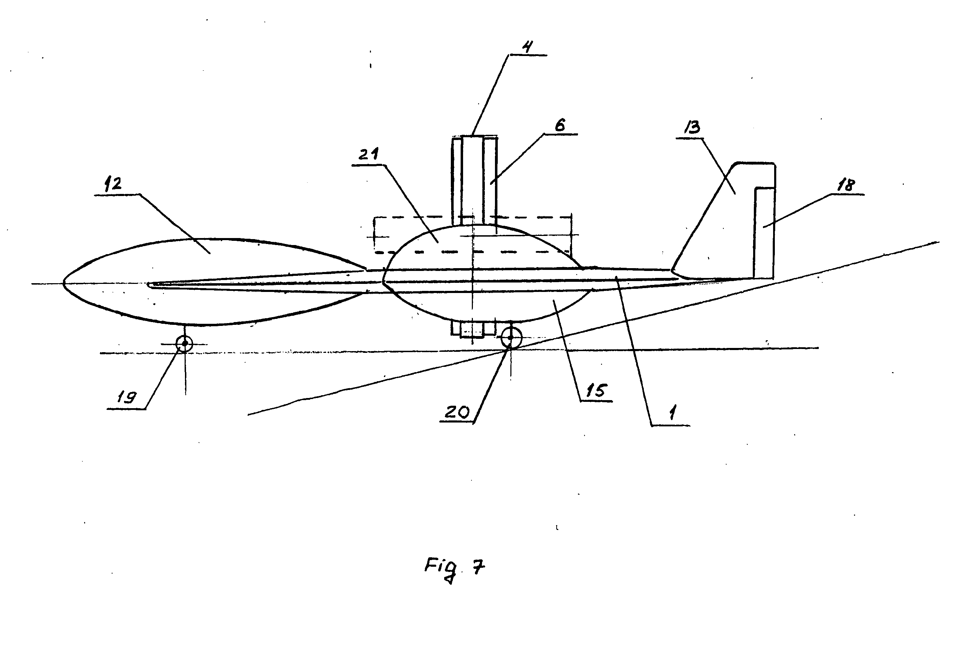

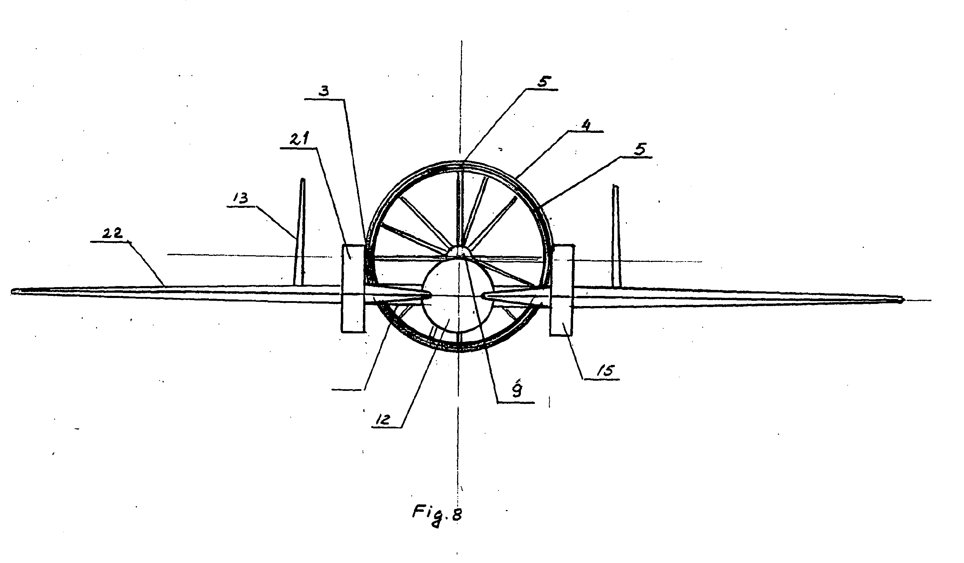

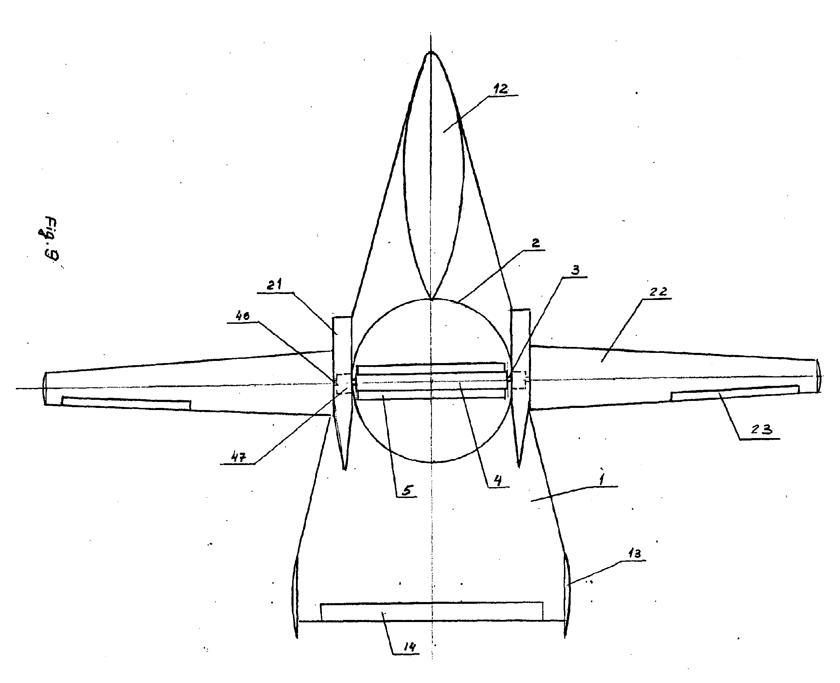

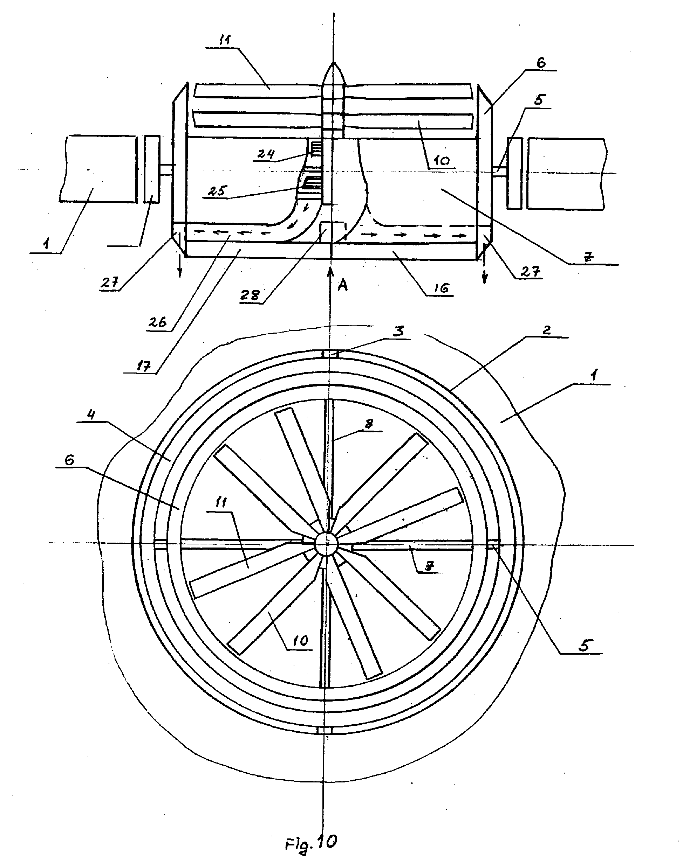

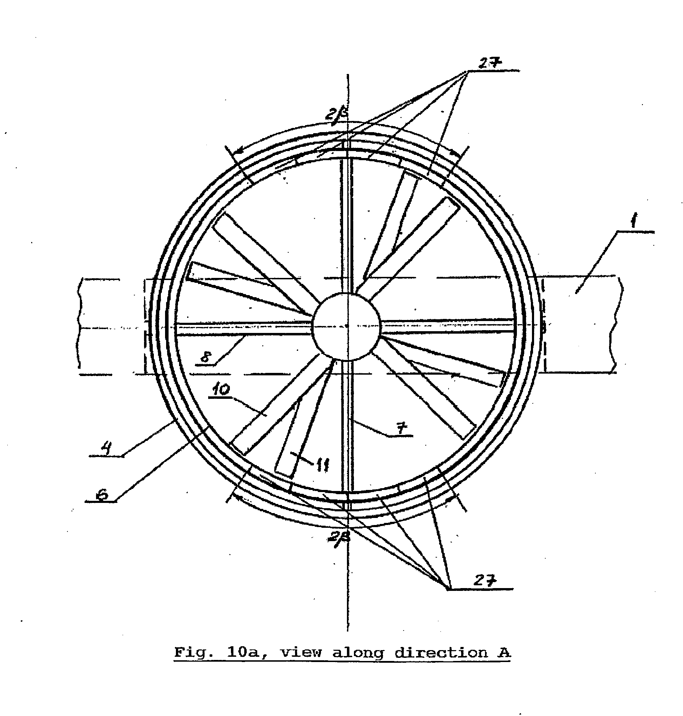

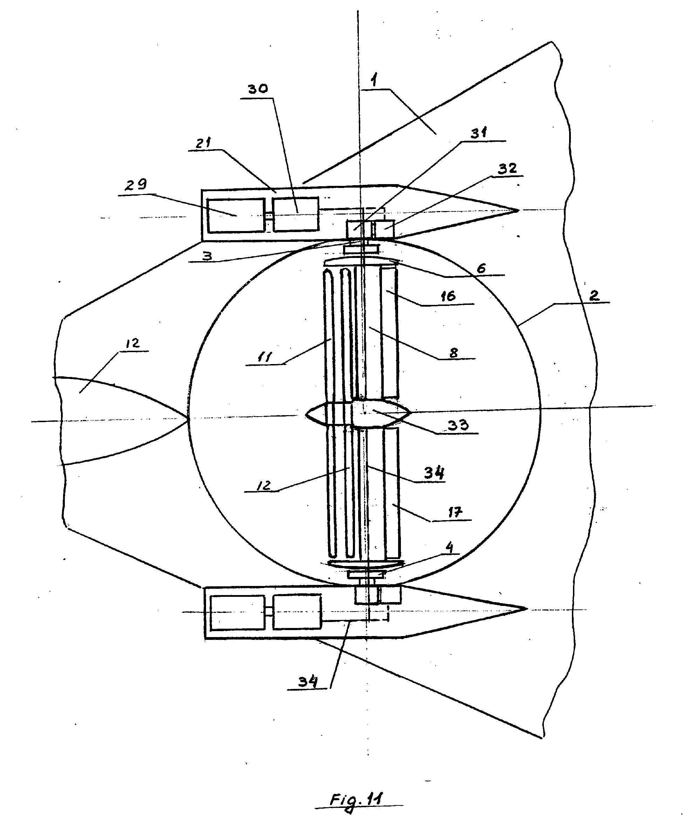

At the center of the ring 6 it is located the propulsor nacelle 9, which is fixed to the structure of the section beams 7 and 8. The axes of the section beams 7 and 8 are substantially perpendicular. The beams 7 and 8 are rigidly connected with the ring 6. Referring to Fig. 2, the convertible aircraft has two coaxial contra-rotating rotors 10 and 11. Each rotor has a variable-pitch four-blade propeller. The external ring 6 may be installed with the aid of electromechanic apparatuses at the angle $\omega$ with respect to the **XZ** plane of the wing 1. The angle $\omega$ is the angle between propulsion vector (thrust) on **XY** plane and **Y** axis perpendicular to the **XZ** plane of the wing 1. For vertical takeoff, $\omega =$**O**. For flight under maximum speed conditions, $\omega=$ **90°.** Theoretically, angle $\omega$ may range from **O** to $\pm$ **180°.** The propulsion vector (thrust) may be tilted with the aid of electromechanic mechanisms to the angle $\gamma$ on **YZ** plane with respect to **Y** axis. The control of the angles $\omega$ and $\gamma$ of the propulsion vector provides for the significant increase of stability and maneuverability of the convertible aircraft under all flight conditions: under helicopter conditions and under airplane conditions. The great advantage of the convertible aircraft according to the present invention is that the propulsion vector (thrust) always runs through the center of gravity of the aircraft, whereas the direction of this vector is variable. The ailerons 16 and 17 at the beam 7 and 8 serve for accurate control of the aircraft during vertical takeoff and landing and during low-speed flight, low speed at which other aerodynamic control means are not effective. The convertible aircraft in Figs 1 to 4 can take off and land as helicopter and fly as airplane at maximum speed in position $\omega = $ **90°** (Fig. 3). Figs. 5, 6, 7 respectively show a plan view, a front view and a side view of the convertible aircraft with two pylons 21 installed on the wing above the nacelle 15; the axis of the transversal hinges 3 is raised with respect to the plane of the wing 1, so that the external ring 4 in vertical position ($\omega=$ **90°**) has a guaranteed gap with respect to the ground, as shown in Figs. 6 and 7. This convertible aircraft can take off and land like a conventional airplane; this is useful to transport big loads (cargo). The convertible aircraft according to the present invention can fly with a large angle of attack, as the rotors in position ($\omega=$ **90°**) provide to convey air in a sufficiently fast amount onto the top surface of the wing 1 to prevent air flow detachment from the surface of the wing 1. The convertible aircraft shown in Figs. 5 and 6 may carry out short-distance takeoff and landing by positioning the rotor at angle $\omega=$ **90°**-**110°**. Figs. 8 and 9 show respectively: a front view and a plan view of another convertible aircraft for long-distance and/or long-lasting flights and/or option of big load (cargo) transport. This convertible aircraft comprises a second wing 22 with larger span: the left and right portions of the wing 22 are connected with the structure of the pylons 21 through hinges 46 which serve for adjusting the pitch of the wing 22 with respect to the plane of the wing 1.The electromechanisms 47 serve for controlling the pitch of the wing 22. The triangular wing 1 of this convertible aircraft may have the span less extended (Fig. 5) than the convertible aircraft of Figs. 1 and 5. The wing 1 in Fig. 9 has the elevator 14, and ailerons 23 placed on the wing 22. Figs. 10 and 10a show a schematic drawing of installation of a turbo-propeller engine fixed to the section-formed structure of the beams 7 and 8. 24 axial compressor, 25 turbine, 7 exhaust gas ducts inside the beam structure, 27 sectorial outlet chamber for exhaust gases. Fig. 10a shows a view taken along direction A (Fig. 10) where there are four chambers 27 for outletting exhaust gases into the structure of the ring 6. Angle $\gamma$ must not exceed 30° of tilt in order to eliminate chances of contact between surfaces of the wing 1 and exhaust gases. The surfaces of the wing 1, in this configuration, are kept apart from the exhaust gases by the large air layer generated by the propellers. Fig. 11 shows a schematic plan view of the propulsion system with an electric motor installed in the nacelle 33, and of the coaxial contra-rotating rotors 11 and 12. Two power units 29 (motor) - 30 (generator) are installed inside the nacelles of the pylons 21, electric cables run inside the structure of the section bar 8 and join the electric motor of the nacelle 33. Electric motors 32 and reduction gears 31 serve for controlling the angle $\omega$ of the propulsion vector (thrust). Alike electromechanic mechanisms, which serve for controlling the angle $\gamma$, are installed in the structure of the external ring 4. The use of the electric motor for propeller can significantly decrease aircraft weight, simplify propeller control and increase flight safety, since in case of breakage of one of the two power units it creates no serious danger to aircraft flight.

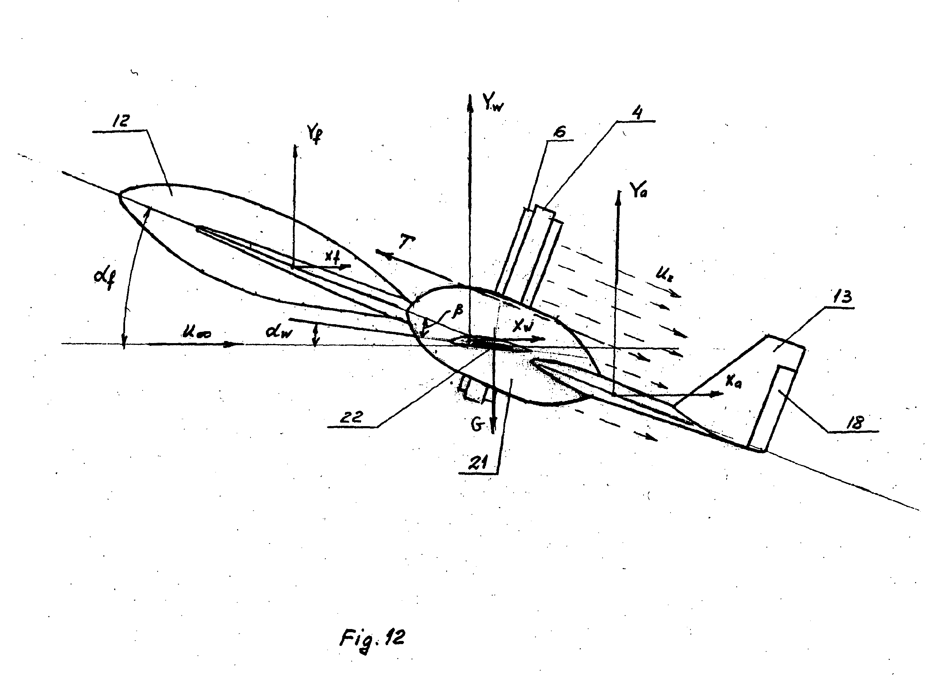

Fig. 12 shows an aerodynamic scheme of the convertible aircraft:

$Y_W$- lift of wing 22,
$X_W$- aerodynamic drag of wing 22,
Ya and Xa are respectively lift and aerodynamic drag of the wing 1
Yf and Xf are respectively lift and aerodynamic drag of the front fuselage 12 with the front portion of the wing 1.
G - aircraft weight
13 - fin with rudder 18.
$u_\infty$ - relative speed of air during flight.
$\alpha_f$ - angle of attack of the wing 1.
$\alpha_w$ - angle of attack of the wing 22.
T- propulsion vector (thrust),

$$\beta = \alpha_f - \alpha_w$$

During flight, all aerodynamics, inertial, thrust and weight are in balance. The convertible aircraft according to the present invention can fly at low speed $u_\infty$ at the large angle $\alpha_f$ producing sufficient lift as the top surface of the wing 1 remains under the air flow of the propeller with a speed $u_r$, and the wing 22 remains at the angle of attack with optimal $\alpha_w$ which is much smaller than $\alpha_f$. Figs. 13 and 14 show respectively a plan view and a side view of the convertible aircraft according to the invention with passenger cabins, wherein;

35-cockpit,
36,39- passenger cabins,
39- power unit compartment,
37- lateral fuselage,
1- small-span wing,
22- large-span wing,
4 and 6- external ring and air sucking ring of the propeller (coaxial rotors), respectively
13- fin,
18- rudder,
40- horizontal tail surface,
41- elevator,
42,43- front door and rear door, respectively
44,45- passenger cabin windows.

In this embodiment the convertible aircraft has three fuselages: a front fuselage with two lateral fuselages (37) with power unit compartments (38) and passenger cabins (39). The three fuselages of the aircraft are dimensioned so that the center of gravity of the aircraft coincides with the center of the propulsion system (rings 4 and 6). The span of the wing 1 is equal to the diameter of the ring 4 of the propulsion system. The most important features of the convertible aircraft can be calculated for each of the above-mentioned versions thereof. The thrust of the propulsion system may be calculated with the following formula:

$$T = \chi_I \rho \omega^2 D^4 \text{ , in kg}$$

Wherein:

$\rho$ - air density at flight altitude, (kgsec$^2$/m$^4$)
$\omega$ - angular velocity of rotors, (rad/sec)
D - rotor diameter, (m)

$\chi_1$ - non-dimensional coefficient, which depends on the aerodynamic features of the rotor.

The motor power required to produce the thrust T may be calculated with the following Formula:

$$W = \chi_2 \rho \omega^3 D^5 \text{ , (kgm/sec)}$$

wherein:

$\chi_2$ - non-dimensional coefficient, which depends on $\chi_1$ and other aerodynamic features of the rotors. During vertical takeoff, T=G, where G is the aircraft weight.

$$W/G = W/T = \chi_3 \omega D$$

Where $\chi_3 = \chi_1 / \chi_2$.

In Aerospace Source Book 2006 (Aviation Week & Space Technology, January 16, 2006), there have been published all technical data related to present-day helicopters and tilt rotors. By analyzing these data we can conclude that, statistically, for heavy-and medium-weight helicopters $W/G \approx 37.5$ m/sec. For light-weight helicopters $W/G \approx 22.5$ m/sec. These data correspond to $\omega = 12$ 1/sec or frequency f=2 rps (120 rpm). Another interesting parameter is the load per air unit of the rotor:

$$p = 4G/\pi D^2, \text{ (kg/m}^2\text{)}$$

By analyzing the data in Aerospace Source Book 2006 we can conclude that, statistically, for heavy- and medium-weight helicopters $p \approx 40$ kg/m$^2$ ; for light-weight helicopters $p \approx 20$ kg/m$^2$; for V22 Osprey $p \approx 120$ kg/m$^2$; for BA609 $p \approx 80$ kg/m$^2$. The BA609 convertiplane has the rotor with D = 8m and a weight G = 7476 kg.
The V22 convertiplane has the rotor with D =11.4m, and a weight G = 24475kg.
From the preceding formulas there ensues

$$p = 4G/\pi D^2 = 4T/\pi D^2 = (4 \chi_1 \rho / \pi)(\omega D)^2$$

From the statistical data we have seen that value ($\omega D$) is constant for the group to which the helicopter type belongs. ($\omega D$) is greater for heavier helicopters, as the rotor diameter D increases.

The rotors of the convertiplanes V22 and BA 609 respectively have a diameter D smaller than the diameter of the helicopter rotor. In order to meet the value of parameter (p), which for helicopters is much greater than this parameter, the rotors of these convertiplanes have a higher value of parameter $\omega$ ($\omega \approx 25$ 1/sec). The convertible aircraft according to the present invention in the embodiment shown in Figs. 13,14 may have parameter $\omega$ and D similar to that for a heavy-weight helicopter. In the light-weight UAV/ UCAV aircraft corresponding to Figs. 1,3,4 and 5,6,7, and 8,9, the convertible aircraft may have smaller rotor diameter and higher angular velocity $\omega$.

From experimental research conducted by TsAGI (Central Aerohydrodynamic Institute, Zhukovski, Russia) it is known that a propulsor containing the propeller inside a ring can yield a 40% to 120% increase of the thrust.

Thus, a convertiplane according to the configuration proposed by us will exhibit a considerable increase of the thrust during takeoff and landing.

Rotor diameter decreases at the increasing of the number of blades.

It is important to optimize the rotation speed (rpm) of the rotors by means of the speed changing system.

During cruising flight, the power required for propulsion in a substantially horizontal flight may be 10 times less than the power required for vertical takeoff.

Therefore, fuel consumption during a substantially horizontal flight decreases significantly, providing the option of a prolonged cruising range.

Table 1 shows the potential features of the convertible aircraft in different versions thereof.

Table 1

| N° | Aircraft features | Aircraft version | | | |
|---|---|---|---|---|---|
| | | Micro UAV | Mini UAV | UAV/UCAV light aircraft | Aircraft with 20-25 persons |
| 1 | load bearing for vertical takeoff, Kg | 2-5 | 40-100 | 150-300 | 2000 |
| 2 | Max. load at takeoff, Kg | 27 | 400 | 1500 | 18000 |
| 3 | Rotor diameter, m | 0.5-0.6 | 2-2,4 | 3,7-4,6 | 13-16 |
| 4 | Motor power, kW | 10 | 120 | 470 | 2x3750 |
| 5 | Max. time of flight, h. | 25-50 | 29-58 | 30-60 | 30 |
| 6 | Maximum flight distance, km | 2500 | 4800 | 7000 | 7000 |
| 7 | Cruising speed; km/h | 100 | 160 | 250 | 250 |
| 8 | Max. speed, km/h | 150 | 320 | 500 | 500 |

From the data in Table 1 it follows that the convertible aircraft exhibits, in all of its embodiments, technical features much more advantageous than those of present-day aircrafts.

**Claims**

1. A convertible aircraft, comprising:

    - a main body integrating at least one substantially triangular wing (1), said main body having a recess (2) centered substantially in correspondence of the center of gravity of said aircraft;
    - a propulsion system associated to said main body so as to make it selectively pivoting within said recess (2) with respect to said main body, comprising:
    - a thrust rotor system (10,11);
    - main motor means (33,9) for operating said thrust rotor system (10,11); and
    - means (31,32) for adjusting the pivoting of said propulsion system with respect to said main body, apt to change the tilt of the thrust developed by said rotor system (10,11);

    wherein the overall assembly is such that the tilt of the axis of rotation of said rotor system (10,11) is variable in association with said pivoting so that the thrust instantaneously developed thereby is vectorially passing through said center of gravity of said aircraft,
    said aircraft further comprising a front fuselage (12), mounted frontally to said main body of said aircraft; and two lateral fuselages (37), connected to said main body symmetrically with respect to a substantially longitudinal axis (X) of said main body of said aircraft.

2. The aircraft according to claim 1, wherein said main body integrates a delta wing (1), having a recess (2) centered substantially in correspondence of the center of gravity of said aircraft.

3. The aircraft according to claim 1 or 2, wherein said thrust rotor system is with twin contra-rotating rotors (10,11).

4. The aircraft according to one of the claims 1 to 3, wherein said propulsion system is connected to said main body by a gimbal system (4,6,3,5), so as to be thus made selectively pivoting within said recess (2) and causing a proportional variation of the direction of said thrust.

5. The aircraft according to claim 4, wherein said gimbal system comprises a first external ring (4), rotatably connected to said main body of said aircraft by means of transversal hinges (3); and a second internal ring (6), rotatably connected to said external ring (4) by means of longitudinal hinges (5).

6. The aircraft according to claim 5, wherein a rotation of said first external ring (4) about said hinges (3) by said adjusting means (31,32) causes a proportional rotation of a first angle (ω) of said thrust about a substantially transversal axis (Z) of said main body of said aircraft.

7. The aircraft according to claim 5 or 6, wherein a rotation of said second internal ring (6) about said hinges (5) by said adjusting means (31,32) causes a proportional rotation of a second angle (γ) of said thrust about a substantially longitudinal axis (X) of said main body of said aircraft.

8. The aircraft according to one of the claims 5 to 7, wherein the axis of rotation of said transversal hinges (3) is substantially perpendicular to said substantially longitudinal axis (X) of said main body of said aircraft and vectorially passing through said center of gravity of said aircraft.

9. The aircraft according to one of the claims 5 to 8, wherein the axis of rotation of said longitudinal hinges (5) is substantially perpendicular to said axis of rotation of said transversal hinges (3).

10. The aircraft according to one of the claims 1 to 9, wherein said main motor means (33) for operating said thrust rotor system (10,11) is integrated in one of the motor nacelles (9), associated through a rotary shaft to said thrust rotor system (10,11).

11. The aircraft according to one of the claims 5 to 10, wherein said transversal hinges (3) are installed on pylons (21) mounted above said wing (1), at a height such that, with regard to the arrangement of the rotation of said thrust about a substantially transversal axis (Z) of said main body of said aircraft of any one value of said first angle (ω), said external ring (4) is anyhow spaced from the takeoff/landing surface for all of the corresponding configurations it can assume, so that no interferences are created.

12. The aircraft according to claim 11, wherein said external ring (4) is spaced from the takeoff/landing surface when in the configuration corresponding to said first angle (ω) substantially equal to 90°.

13. The aircraft according to any of the preceding claims, wherein on said two lateral fuselages (37) respective fins (13) are installed, connected therebetween by a common horizontal tail surface (40).

14. The aircraft according to one of the preceding claims, comprising a substantially tricycle landing gear, said landing gear comprising a front wheel (19) placed beneath said front fuselage and two rear wheels (20) respectively placed beneath said lateral fuselages (37) and extractable from respective nacelles (15).

15. The aircraft according to one of the preceding claims, wherein said front fuselage (12) comprises a cockpit (35) and a passenger cabin (36).

16. The aircraft according to one of the preceding claims, wherein each of said lateral fuselages (37) comprises a compartment (38) apt to house a power unit and a passenger cabin (39)

17. The aircraft according to one of the preceding claims, wherein said front fuselage (12) and said lateral fuselages (37) comprise a watertight bottom apt to allow in-water translation of said aircraft.

18. The aircraft according to one of the claims 15 or 16, wherein said passenger cabin (12) is convertible to cargo transport and/or cistern and/or tank integrating devices for collecting liquid for fire-extinguishing operations and the like from reservoirs.

**Patentansprüche**

1. Verwandlungsflugzeug mit:

- einem Hauptkörper, der wenigstens einen im Wesentlichen dreieckigen Tragflügel (1) integriert, wobei der Hauptkörper eine Ausnehmung (2) hat, die im Wesentlichen entsprechend dem Schwerpunkt des Flugzeuges zentriert ist;
- einem Vortriebssystem, das dem Hauptkörper so zugeordnet ist, dass es innerhalb der Ausnehmung (2) in Bezug auf den Hauptkörper wahlweise verschwenkbar ist, mit:
- einem Schubrotorsystem (10, 11);

- einer Hauptrotoreinrichtung (33, 9) zum Betreiben des Schubrotorsystems (10, 11); und
- einer Einrichtung (31, 32) zum Einstellen der Verschwenkung des Vortriebssystems in Bezug auf den Hauptkörper, um **dadurch** die Neigung des durch das Rotorsystem (10, 11) entwickelten Schubes zu ändern;

wobei die Gesamtanordnung so getroffen ist, dass die Neigung der Drehachse des Rotorsystems (10, 11) in Zuordnung zu der Verschwenkung variabel ist, so dass der Schub, der **dadurch** augenblicklich entwickelt wird, vektoriell durch den Schwerpunkt des Flugzeuges hindurchgeht, wobei das Flugzeug weiter einen Frontrumpf (12) aufweist, der vor dem Hauptkörper des Flugzeuges angebracht ist; und zwei seitliche Rümpfe (37), die mit dem Hauptkörper symmetrisch in Bezug auf eine im Wesentlichen longitudinale Achse (X) des Hauptkörpers des Flugzeuges verbunden sind.

2. Flugzeug nach Anspruch 1, wobei der Hauptkörper einen Deltaflügel (1) integriert, der eine Ausnehmung (2) hat, die im Wesentlichen entsprechend dem Schwerpunkt des Flugzeuges zentriert ist.

3. Flugzeug nach Anspruch 1 oder 2, wobei das Schubrotorsystem zwei gegenläufig drehende Rotoren (10, 11) aufweist.

4. Flugzeug nach einem der Ansprüche 1 bis 3, wobei das Vortriebssystem mit dem Hauptkörper durch ein Kardansystem (4, 6, 3, 5) verbunden ist, so dass es **dadurch** innerhalb der Ausnehmung (2) wahlweise verschwenkbar ist, um eine proportionale Veränderung der Richtung des Schubes hervorzurufen.

5. Flugzeug nach Anspruch 4, wobei das Kardansystem einen ersten, externen Ring (4) umfasst, der mit dem Hauptkörper des Flugzeuges mit Hilfe von transversalen Gelenken (3) drehbar verbunden ist; und einen zweiten, internen Ring (6), welcher mit dem externen Ring (4) mit Hilfe von longitudinalen Gelenken (5) drehbar verbunden ist.

6. Flugzeug nach Anspruch 5, wobei eine Drehung des ersten, externen Ringes (4) um die Gelenke (3) durch die Einstelleinrichtung (31, 32) eine proportionale Drehung des Schubes um einen ersten Winkel ($\omega$) um eine im Wesentlichen transversale Achse (Z) des Hauptkörpers des Flugzeuges bewirkt.

7. Flugzeug nach Anspruch 5 oder 6, wobei eine Drehung des zweiten, internen Ringes (6) um die Gelenke (5) durch die Einstelleinrichtung (31, 32) eine proportionale Drehung des Schubes um einen zweiten Winkel ($\gamma$) um eine im Wesentlichen longitudinale Achse (X) des Hauptkörpers des Flugzeuges bewirkt.

8. Flugzeug nach einem der Ansprüche 5 bis 7, wobei die Drehachse der transversalen Gelenke (3) zu der im Wesentlichen longitudinalen Achse (X) des Hauptkörpers des Flugzeuges im Wesentlichen rechtwinkelig ist und vektoriell durch den Schwerpunkt des Flugzeuges hindurchgeht.

9. Flugzeug nach einem der Ansprüche 5 bis 8, wobei die Drehachse der longitudinalen Gelenke (5) zu der Drehachse der transversalen Gelenke (3) im Wesentlichen rechtwinkelig ist.

10. Flugzeug nach einem der Ansprüche 1 bis 9, wobei die Hauptrotoreinrichtung (33) zum Betreiben des Schubrotorsystems (10, 11) in eine der Motorgondeln (9) integriert und über eine Welle mit dem Schubrotorsystem (10, 11) verbunden ist.

11. Flugzeug nach einem der Ansprüche 5 bis 10, wobei die transversalen Gelenke (3) auf Pylonen (21) installiert sind, welche auf dem Tragflügel (1) angebracht sind, in einer derartigen Höhe, dass in Bezug auf die Anordnung der Drehung des Schubes um eine im Wesentlichen transversale Achse (Z) des Hauptkörpers des Flugzeuges um irgendeinen Wert des ersten Winkels ($\omega$) der externe Ring (4) auf jeden Fall von der Start-/Landefläche für alle entsprechenden Konfigurationen, die er einnehmen kann, beabstandet ist, so dass keine Störungen erzeugt werden.

12. Flugzeug nach Anspruch 11, wobei der externe Ring (4) von der Start-/Landefläche beabstandet ist, wenn er in der Konfiguration ist, die dem ersten Winkel ($\omega$) entspricht, der im Wesentlichen gleich 90° ist.

13. Flugzeug nach einem der vorhergehenden Ansprüche, wobei auf den beiden seitlichen Rümpfen (37) Flossen (13) installiert sind, welche durch eine gemeinsame horizontale Schwanzfläche (40) miteinander verbunden sind.

14. Flugzeug nach einem der vorhergehenden Ansprüche, mit einem im Wesentlichen dreirädrigen Fahrwerk, wobei das Fahrwerk ein Frontrad (19) umfasst, das unter dem vorderen Rumpf angeordnet ist, und zwei hintere Räder (20), die unter den seitlichen Rümpfen (37) platziert und aus den Gondeln (15) ausfahrbar sind.

**15.** Flugzeug nach einem der vorhergehenden Ansprüche, wobei der vordere Rumpf (12) ein Cockpit (35) und eine Passagierkabine (36) umfasst.

**16.** Flugzeug nach einem der vorhergehenden Ansprüche, wobei jeder der seitlichen Rümpfe (37) ein Abteil (38) umfasst, das in der Lage ist, eine Antriebseinheit und eine Passagierkabine (39) aufzunehmen.

**17.** Flugzeug nach einem der vorhergehenden Ansprüche, wobei der vordere Rumpf (12) und die seitlichen Rümpfe (37) einen wasserdichten Boden aufweisen, welcher die Bewegung des Flugzeuges auf dem Wasser erlaubt.

**18.** Flugzeug nach Anspruch 15 oder 16, wobei die Passagierkabine (12) in Ladungstransport- und/oder Zisternen- und/oder tankintegrierende Vorrichtungen verwandelbar ist zum Aufnehmen von Flüssigkeit für Feuerlöscheinsätze und dgl. aus Reservoiren.

## Revendications

**1.** Aéronef convertible comprenant :

- un corps principal comprenant au moins une aile sensiblement triangulaire (1), ledit corps principal comportant un évidement (2) centré sensiblement en correspondance avec le centre de gravité dudit aéronef ;
- un système de propulsion associé audit corps principal de manière à le faire pivoter sélectivement dans ledit évidement (2) par rapport audit corps principal, comprenant :
- un système de rotor de poussée (10, 11) ;
- un moyen formant moteur principal (33, 9) pour faire fonctionner ledit système de rotor de poussée (10, 11) ; et
- un moyen (31, 32) pour régler le pivotement dudit système de propulsion par rapport au corps principal, apte à changer l'inclinaison de la poussée développée par ledit système de rotor (10, 11) ;

dans lequel l'assemblage global est tel que l'inclinaison de l'axe de rotation dudit système de rotor (10, 11) est variable en association avec ledit pivotement, de sorte que la poussée développée de manière instantanée par celui-ci passe vectoriellement par ledit centre de gravité de l'aéronef,
ledit aéronef comprenant en outre un fuselage avant (12), monté à l'avant dudit corps principal de l'aéronef, et deux fuselages latéraux (37) connectés audit corps principal de façon symétrique par rapport à un axe substantiellement longitudinal (X) dudit corps principal de l'aéronef.

**2.** Aéronef selon la revendication 1, dans lequel ledit corps principal comprend une aile delta (1), comportant un évidement (2) centré sensiblement en correspondance avec le centre de gravité dudit aéronef.

**3.** Aéronef selon la revendication 1 ou 2, dans lequel ledit système de rotor de poussée est à deux rotors contrarotatifs (10, 11).

**4.** Aéronef selon l'une des revendications 1 à 3, dans lequel ledit système de propulsion est connecté audit corps principal par un système de suspension à cardan (4, 6, 3, 5), afin de pouvoir le faire pivoter sélectivement dans ledit évidement (2) et provoquer une variation proportionnelle de la direction de ladite poussée.

**5.** Aéronef selon la revendication 4, dans lequel ledit système de suspension à cardan comprend un premier anneau extérieur (4), connecté à rotation audit corps principal de l'aéronef au moyen d'articulations transversales (3), et un deuxième anneau intérieur (6), connecté à rotation audit anneau extérieur (4) au moyen d'articulations longitudinales (5).

**6.** Aéronef selon la revendication 5, dans lequel une rotation dudit premier anneau extérieur (4) autour desdites articulations (3) effectuée par ledit moyen de réglage (31, 32) provoque une rotation proportionnelle d'un premier angle (ω) de ladite poussée autour d'un axe sensiblement transversal (Z) dudit corps principal de l'aéronef.

**7.** Aéronef selon la revendication 5 ou 6, dans lequel une rotation dudit deuxième anneau intérieur (6) autour desdites articulations (5) effectuée par ledit moyen de réglage (31, 32) provoque une rotation proportionnelle d'un deuxième angle (γ) de ladite poussée autour d'un axe sensiblement longitudinal (X) dudit corps principal de l'aéronef.

8. Aéronef selon l'une des revendications 5 à 7, dans lequel l'axe de rotation desdites articulations transversales (3) est sensiblement perpendiculaire audit axe sensiblement longitudinal (X) dudit corps principal de l'aéronef et passant vectoriellement par ledit centre de gravité de l'aéronef.

9. Aéronef selon l'une des revendications 5 à 8, dans lequel l'axe de rotation desdites articulations longitudinales (3) est sensiblement perpendiculaire audit axe de rotation desdites articulations transversales (3).

10. Aéronef selon l'une des revendications 1 à 9, dans lequel ledit moyen formant moteur principal (33) pour faire fonctionner ledit système de rotor de poussée (10, 11) est intégré à l'une des nacelles de moteur (9), associé par l'intermédiaire d'un arbre rotatif audit système de rotor de poussée (10, 11).

11. Aéronef selon l'une des revendications 5 à 10, dans lequel lesdites articulations transversales (3) sont installées sur des mâts (21) montés au-dessus de ladite aile (1), à une hauteur telle que, en ce qui concerne l'agencement de la rotation de ladite poussée autour d'un axe sensiblement transversal (Z) du corps principal dudit aéronef d'une valeur quelconque dudit premier angle (ω), ledit anneau extérieur (4) est toujours espacé de la surface de décollage ou d'atterrissage pour toutes les configurations correspondantes qu'il peut prendre, de sorte qu'aucune interférence n'est créée.

12. Aéronef selon la revendication 11, dans lequel ledit anneau extérieur (4) est espacé de la surface de décollage ou d'atterrissage quand il est dans la configuration correspondant audit premier angle (ω) sensiblement égal à 90°.

13. Aéronef selon l'une quelconque des revendications précédentes, dans lequel, sur lesdits deux fuselages latéraux (37), des dérives respectives (13) sont installées, connectées entre elles par une surface de queue horizontale commune (40).

14. Aéronef selon l'une des revendications précédentes, comprenant un train d'atterrissage substantiellement tricycle, ledit train d'atterrissage comprenant une roue avant (19) placée sous ledit fuselage avant et deux roues arrière (20) respectivement placées sous lesdits fuselages latéraux (37) et extractibles de nacelles respectives (15).

15. Aéronef selon l'une des revendications précédentes, dans lequel ledit fuselage avant (12) comprend un poste de pilotage (35) et une cabine de passagers (36).

16. Aéronef selon l'une des revendications précédentes, dans lequel chacun desdits fuselages latéraux (37) comprend un compartiment (38) apte à recevoir un groupe moteur et une cabine de passagers (39).

17. Aéronef selon l'une des revendications précédentes, dans lequel ledit fuselage avant (12) et lesdits fuselages latéraux (37) comprennent un fond étanche apte à permettre la translation dans l'eau dudit aéronef.

18. Aéronef selon l'une des revendications 15 et 16, dans lequel ladite cabine de passagers (12) peut être convertie pour le transport de fret et/ou d'une citerne et/ou de dispositifs intégrant un réservoir destiné à recueillir un liquide pour des opérations d'extinction d'incendies à partir de réservoirs.

Fig. 1

Fig. 2

Fig. 5

Fig. 4

Fig. 5

Fig. 6

Fig. 7

EP 1 999 016 B1

Fig. 8

EP 1 999 016 B1

Fig. 9

Fig. 10

Fig. 10a, view along direction A

Fig. 11

Fig. 12

Fig. 13

Fig.14

**EP 1 999 016 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4613097 A
- US 3049320 A
- DE 1947944 A1
- US 6343768 B1
- US 2876965 A

### Non-patent literature cited in the description

- *Aviation Week & Space Technology,* 02 January 2006, 56
- *Aviation Week & Space Technology,* 06 February 2006, 36
- *Aviation Week & Space Technology,* 16 January 2006